# EUROPEAN PATENT SPECIFICATION

(11) **EP 2 631 090 B1**
(45) Date of publication and mention of the grant of the patent: **20.12.2017**
(21) Application number: 11834398.7
(22) Date of filing: 19.10.2011
(51) Int. Cl.: B60C 11/13, B60C 11/11

(54) **TIRE**
REIFEN
PNEUMATIQUE

(30) Priority: 19.10.2010 JP 2010234660
(43) Date of publication of application: 28.08.2013
(73) Proprietor: Bridgestone Corporation, Tokyo 104-8340 (JP)
(72) Inventor: AKASHI, Tokumasa, Tokyo 187-8531 (JP)
(74) Representative: Lamb, Martin John Carstairs
(86) International application number: PCT/JP2011/074065
(87) International publication number: WO 2012/053559

(56) References cited:
- EP-A1- 1 127 716
- EP-A1- 2 412 547
- EP-A2- 0 354 718
- WO-A1-2009/147046
- JP-A- H04 274 907
- JP-A- 2008 307 991

## Description

### [Technical Field]

The present invention relates to a tire including a block having a tread surface that constitutes a tire tread surface.

### [Background Art]

Conventionally, a tire including a plurality of blocks having tread surfaces that constitute tire tread surfaces. Each block is partitioned by a circumferential groove or a widthwise grooves or the like, and constitutes a tread pattern.

Here, it is known that a noise referred to as a "pitch noise" or a "pattern noise" or the like is generated if a block collides with a tire grounding surface such as a road surface. As a method for restraining such a noise, there is proposed a method for chamfering a tread surface of a block to thereby mitigate a shock exerted in a case where a block (a tread surface) collides with a tire grounding surface (for example, Patent Literature I).

### [Citation List]

### [Patent Literature]

Patent Literature 1: Japanese Patent Application Publication No. 2007-055333

WO2009/147046 discloses a tire for driving on ice, wherein the tire comprising a block having a tread surface that constitutes a tire tread surface, wherein the block is partitioned by at least one or more deep grooves, the block has a cut-out groove at an end portion in a tire circumferential direction, and a width of the cut-out groove in a tire width direction is greater than 2 mm and is 50% or less of a width of the block in the tire width direction, wherein the cut-out groove extends along the tire circumferential direction and terminates within the block. JP2008-307991 discloses a tire profile for the suppression of heel-and-toe abrasion and comprising slits extending across corners of a tire block.

EP 2 412 547 discloses a motorcycle tire for running on rough terrain wherein some of the blocks are a cut to comprise a U-shaped cut.

### [Summary of Invention]

As a result of an utmost study having been repeatedly made, the Inventor found out that a deformation of a block, caused by a shear force in a tire circumferential direction exerted by a friction between a tire grounding surface and a tread surface, is one of the causes of noise.

However, the deformation of the block, caused by the shear force in the tire circumferential direction, cannot be restrained by chamfering the tread surface of the block described above.

Therefore, the present invention has been made in order to solve the problem described above, and it is an object of the present invention to provide a tire that is capable of restraining a noise referred to as a "pitch noise" or a "pattern noise" or the like.

A tire according to a first feature comprises a block having a tread surface that constitutes a tire tread surface, wherein the block is partitioned by at least one or more deep grooves, the block has a pair of cutout grooves at an end portion in a tire circumferential direction, and a width of each of the cutout grooves in a tire width direction is greater than 2 mm, and is 50% or less of a width of the block in the tire width direction. The cutout grooves extend along the tire circumferential direction and terminate within the block. 50% or more of a width of the cutout grooves in the tire width direction is included in a range of 50% or less of a width of the block in the tire width direction around the centerline of the block in the tire width direction.

In the first feature, a depth from the tread surface to a bottom of the cutout groove is 50% or less of a depth from the tread surface to a bottom of the deep groove.

In the first feature, the cutout groove is formed at a stepping side end portion among end portions of the block in the tire circumferential direction.

In the first feature, the cutout groove has a linearly symmetrical shape with respect to a centerline of the block in the tire width direction.

In the first feature, the width of the cutout groove is smaller as it is more distant from an end portion of the block in the tire circumferential direction.

In the first feature, the cutout groove is formed in a triangular shape in a plan view of the block.

### [Brief Description of Drawings]

[Fig. 1] Fig. 1 is an enlarged plan view showing a portion of a tire 100 according to a first embodiment.
[Fig. 2] Fig. 2 is a perspective view showing a block 10 according to the first embodiment.
[Fig. 3] Fig. 3 is a plan view showing a block 10 (a tread surface) according to the first embodiment.
[Fig. 4] Fig. 4 is a view showing a deformation of a block in which a cutout groove is not formed.
[Fig. 5] Fig. 5 is a view showing a deformation of the block 10 in which a cutout groove 12 is formed.
[Fig. 6] Fig. 6 is a plan view showing a block (a tread surface) according to Comparative Example 1.
[Fig. 7] Fig. 7 is a plan view showing a block 10 (a tread surface) according to Example 1.
[Fig. 8] Fig. 8 is a plan view showing a block 10 (a tread surface) according to Example 2.
[Fig. 9] Fig. 9 is a plan view showing a block 10 (a tread surface) according to Example 3.
[Fig. 10] Fig. 10 is a plan view showing a block 10 (a tread surface) according to Example 4.
[Fig. 11] Fig. 11 is a plan view showing a block 10 (a tread surface) according to Example 5.
[Fig. 12] Fig. 12 is a plan view showing blocks 10 (tread surfaces) according to Example 6, Comparative Example 2, and Comparative Example 3.
[Fig. 13] Fig. 13 is a view showing an evaluation result of Evaluation 1.
[Fig. 14] Fig. 14 is a plan view showing a block 10 (a tread surface) according to another embodiment.

### [Description of Embodiments]

Hereinafter, a tire according to an embodiment of the present invention will be described with reference to the drawings. In the following description of the drawings, same or similar constituent elements are designated by same or similar reference numerals.

However, it should be kept in mind that the drawings are merely schematic, and rates or the like of the respective dimensions are different from real ones. Therefore, specific dimensions or the like should be determined in consideration of the following description. In addition, it is a matter of course that among the respective drawings as well, portions which are different from each other in dimensional relationship or rate are included.

### [Outline of Embodiments]

A tire (a tire 100) according to the embodiment includes a block (a block 10) having a tread surface that constitutes a tire tread surface. The block is partitioned by at least one or more deep grooves (deep grooves 20). The block has a cutout groove (a cutout groove 12) at an end portion in a tire circumferential direction. A width of the cutout groove in a tire width direction is greater than 2 mm, and is 50% or less of a width of a block in the tire width direction.

In the embodiment, the block has a cutout groove at an end portion in the tire circumferential direction. Therefore, only a portion of the block, a rigidity of which is lowered by the cutout groove, is easily deformed by a shear force in the tire circumferential direction exerted by a friction between a tire grounding surface and a tread surface, and a deformation of another portion of the block, a rigidity of which is not lowered by the cutout groove, is restrained. In other words, only a portion of the block, which is more proximal to the tread surface, is easily deformed, and a deformation of another portion of the block, which is more proximal to the tire grounding surface, is restrained.

Thus, since a deformation of the block, caused by the shear force in the tire circumferential direction, is restrained, a noise referred to as a "pitch noise" or a "pattern noise" or the like can be restrained.

In the embodiment, the width of the cutout groove in the tire width direction is greater than 2 mm, and is 50% or less of the width of a block in the tire width direction. Therefore, while the rigidity of the block is restrained from being degraded more than necessary, the noise referred to as the "pitch noise" or the "pattern noise" or the like can be restrained.

### [First Embodiment]

### (Structure of Tire)

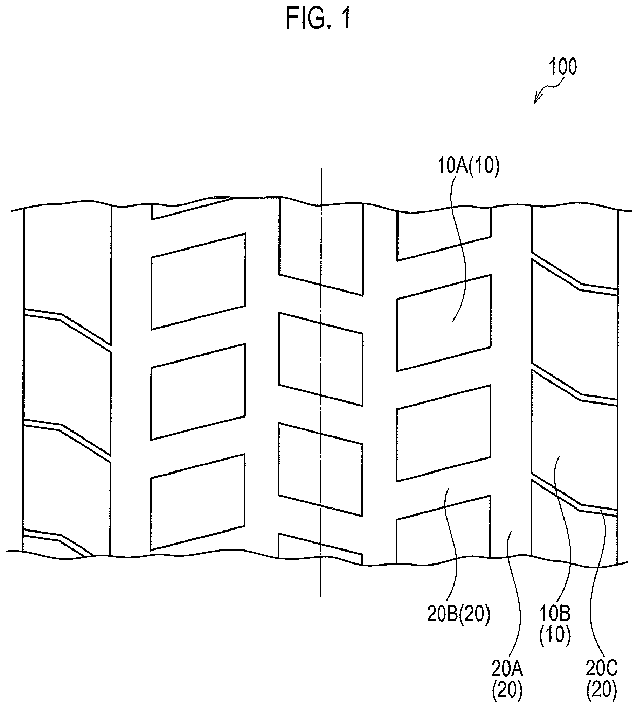

Hereinafter, a tire according to a first embodiment will be described with reference to the drawings. Fig. 1 is an enlarged plan view showing a portion of a tire 100 according to the first embodiment. Specifically, Fig. 1 illustrates a portion of a tire tread surface of the tire 100.

As shown in Fig. 1, the tire 100 has a block 10 having a tread surface that constitutes a tire tread surface. The block 10 is partitioned by at least one or more deep grooves 20. The deep grooves 20 are a circumferential groove 20A, a widthwise groove 20B, and a shoulder groove 20C, for example.

The block 10 includes a block 10A that is partitioned by the circumferential groove 20A and the widthwise groove 20B and a block 10B that is partitioned by the circumferential groove 20A and the shoulder groove 20C. However, the block 10 will be described hereinafter without discriminating the block 10A and the block 10B.

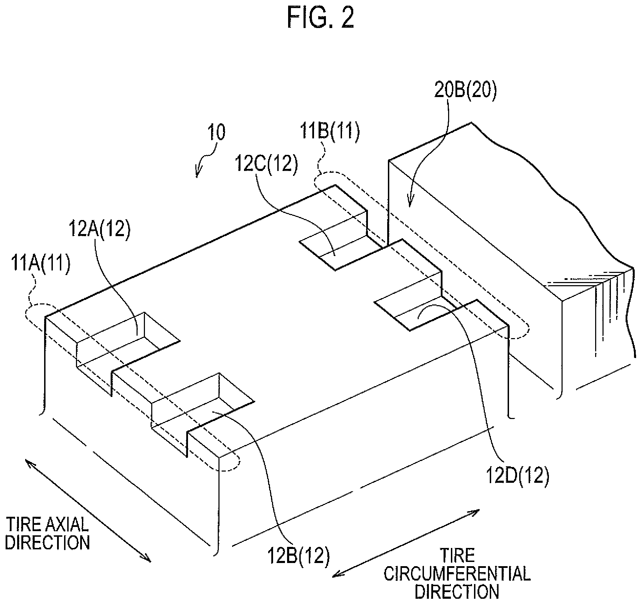

Subsequently, the block 10 will be described with reference to Fig. 2. Fig. 2 is a perspective view showing the block 10 according to the first embodiment.

The block 10 (the tread surface), as shown in Fig. 2, has one pair of end portions 11 (an end portion 11A and an end portion 11B) in the tire circumferential direction. For example, the end portion 11A is an end portion on a stepping side, and the end portion 11B is an end portion on a kicking side.

The block 10 has cutout grooves 12 (a cutout groove 12A, a cutout groove 12B, a cutout groove 12C, and a cutout groove 12D) at the end portions 11 in the tire circumferential direction. A width of each of the cutout grooves 12 in the tire width direction is greater than 2 mm, and is 50% or less of a width of the block 10 in the tire width direction. It is preferable that the width of each of the cutout grooves 12 in the tire width direction be 20% to 30% of the width of the block 10 in the tire width direction.

Here, the cutout grooves 12 are formed at either or both of the end portion 11A and the end portion 11B. In particular, it is preferable that each of the cutout grooves 12 be formed at the end portion 11A (the end portion on the stepping side). It is a matter of course that each of the cutout grooves 12 is in communication with a deep groove 20 (for example, the widthwise groove 20B or the shoulder groove 20C) at each of the end portions 11.

In the first embodiment, the cutout groove 12A and the cutout groove 12B are formed at the end portion 11A (the end portion on the stepping side), and the cutout groove 12C and the cutout groove 12D are formed at the end portion 11B (the end portion on the kicking side).

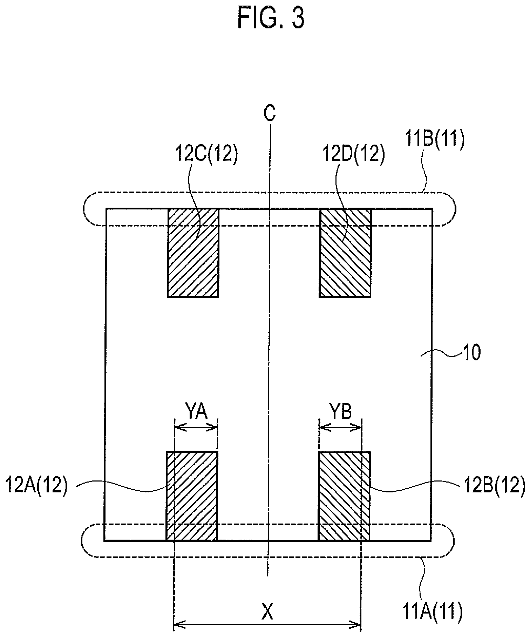

It is preferable that each of the cutout grooves 12, as shown in Fig. 3, has a linearly symmetrical shape with respect to a centerline C of the block in the tire width direction. In a case where a plurality of cutout grooves 12 are formed at a same end portion, it is sufficient if the plurality of cutout grooves 12 each have a linearly symmetrical shape with respect to the centerline C. For example, the cutout groove 12A and the cutout groove 12B each have a linearly symmetrical shape with respect to the centerline C. Similarly, the cutout groove 12C and the cutout groove 12D each have a linearly symmetrical shape with respect to the centerline C.

It is preferable that 50% or more of the width of each of the cutout grooves 12 in the tire width direction be included within the range of 50% or less of the width of the block 10 in the tire width direction around the centerline C of the block 10 in the tire width direction. In a case where a plurality of cutout grooves 12 are formed at a same end portion, it is sufficient if 50% or more of a total width of the plurality of cutout grooves 12 be included in the abovementioned range all over the plurality of the cutout grooves 12.

Let us describe a case in which the range of 50% or less of the width of a block 10 in the tire width direction is represented by "X" around the centerline C of the block 10 in the tire width direction, as shown in Fig. 3, for example. Of the width of the cutout groove 12A in the tire width direction, a width included in the range (X) is represented by "YB", and of the width of the cutout groove 12B in the tire width direction, a width included in the range (X) is represented by "YB". In such a case, a total of the width (YA) and the width (YB) is 50% or more of a total of the width of the cutout groove 12A and the width of the cutout groove 12B.

However, it should be kept in mind that the "width of the cutout groove 12A" is the width of the cutout groove 12A at an end portion 11 in the tire circumferential direction.

A depth from a tread surface to a bottom of each of the cutout grooves 12 is 50% or less of a depth of a tread surface to a bottom of a deep groove 20. In addition, it is preferable that the depth from the tread surface to the bottom of each of the cutout grooves 12 be 20% or less of the depth from the tread surface to the bottom of the deep groove 20.

The depth from the tread surface to the bottom of each of the cutout grooves 12 may be a minimum value, a maximum value, or an average value of the depth from the tread surface to the bottom of each of the cutout grooves 12. Similarly, the depth from the tread surface to the bottom of the deep groove 20 may be a minimum value, a maximum value, or an average value of the tread surface to the bottom of the deep groove 20.

Here, the depth from the tread surface to the bottom of each of the cutout grooves 12 has at least a depth to an extent such that the bottom of each of the cutout grooves 12 does not come into contact with a tire grounding surface due to a load of a vehicle to which the tire 100 is to be mounted. Therefore, it is a matter of course that the depth from the tread surface to each of the cutout grooves 12 may be different depending on the load of the vehicle to which the tire 100 is to be mounted.

### (Deformation of Block Caused by Shear Force)

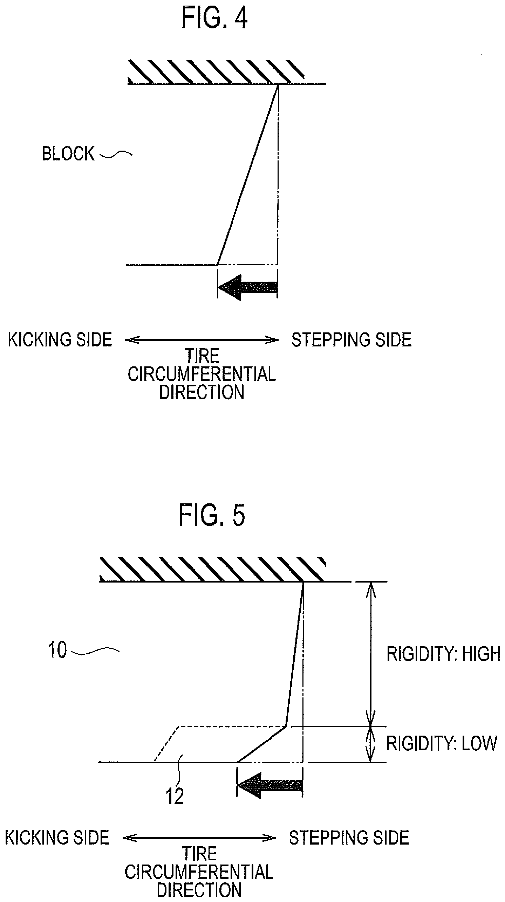

Hereinafter, a deformation of a block, caused by a shear force in a tire circumferential direction exerted by a friction between a tire grounding surface and a tread surface, will be described with reference to the drawings. Fig. 4 is a view showing deformation of a block in which a cutout groove is not formed. Fig. 5 is a view showing deformation of a block 10 in which a cutout groove 12 is formed.

In a case where a cutout groove is not formed, as shown in Fig. 4, since the rigidity of a block is all the same, the block is entirely deformed due to the shear force in the tire circumferential direction.

On the other hand, in a case where the cutout grooves 12 are formed, as shown in Fig. 5, since the rigidity of a portion of the block 10 in which the cutout grooves 12 are formed lowers more than the rigidity of a portion of the block 10 in which the cutout grooves 12 are not formed. Therefore, only a portion of the block 10, a rigidity of which is lowered by the cutout grooves 12, is easily deformed. Thus, in the case shown in Fig. 5, a deformation of the block 10, caused by the shear force in the tire circumferential direction, is restrained as a whole in comparison with the case shown in Fig. 4.

### (Advantageous Effects)

In the first embodiment, the block 10 has the cutout grooves 12 at the end portions in the tire circumferential direction. Therefore, only a portion of the block 10, a rigidity of which is lowered by the cutout grooves 12, is easily deformed by the shear force in the tire circumferential direction exerted by the friction between the tire grounding surface and the tread surface, and a deformation of another portion of the block 10, a rigidity of which is not lowered by the cutout grooves 12, is restrained. In other words, only a portion of the block 10, which is more proximal to the tread surface, is easily deformed, and a deformation of another portion of the block 10, which is more proximal to the tire grounding surface, is restrained.

Thus, since a deformation of the block 10, caused by the shear force in the tire circumferential direction, is retrained as a whole, a noise referred to as a "pitch noise" or a "pattern noise" or the like can be restrained.

In the first embodiment, the width of each of cutout grooves 12 in the tire width direction is greater than 2 mm, and is 50% or less of the width of the block 10 in the tire width direction. Therefore, while the rigidity of the block 10 is restrained from being degraded more than necessary, the noise referred to as the "pitch noise" or the "pattern noise" or the like can be restrained.

In detail, in a case where the width of each of the cutout grooves 12 is 2 mm or less, the rigidity of the block 10 cannot be sufficiently lowered, and a deformation of the block 10, caused by the shear force in the tire circumferential direction, cannot be restrained. On the other hand, in a case where the width of each of the cutout grooves 12 is greater than 50% of the width of the block 10, the rigidity that is essentially required for the block 10 cannot be maintained.

In the first embodiment, the cutout grooves 12 are formed at either or both of the end portion 11A and the end portion 11B. Therefore, a deformation of the end portions 11 (corner portions) of the block 10 is accelerated, and a deformation of the block 10, caused by the shear force in the tire circumferential direction, can be efficiently restrained as a whole.

In particular, the cutout groove 12A and the cutout groove 12B are formed at the end portion 11A (the end portion on the stepping side) of the end portions 11A and the end portion 11B. Therefore, a deformation of the block 10 is restrained at the time of stepping, and a noise such as a "pitch noise" or a "pattern noise" or the like can be efficiently restrained.

In the first embodiment, the cutout grooves 12 each have a linear symmetrical shape with respect to the centerline C of the block 10 in the tire width direction. Therefore, the lowering in balance of the block 10 by the cutout grooves 12 can be restrained.

In the first embodiment, 50% or more of the width of each of the cutout grooves 12 in the tire width direction is included in the range of 50% or more of the width of the block 10 in the tire width direction around the centerline C of the block 10 in the tire width direction. In other words, the cutout grooves 12 each is formed in a location more proximal to the center of the block 10 in the tire width direction. Here, it is presumed that the shear force in the tire circumferential direction is great at the center of the block 10 in the tire width direction. Therefore, at a portion at which the shear force in the tire circumferential direction is great, a deformation of the end portions 11 (the corner portions) of the block 10 is accelerated, and a deformation of the block 10, caused by the shear force in the tire circumferential direction, can be efficiently restrained as a whole.

### [Outline of Evaluation]

Hereinafter, a result of an evaluation will be described. In this evaluation, levels of noises collected by means of a microphone were measured in accordance with the following conditions.

- External dimensions of evaluation tire: 11R22.5
- Internal pressure of evaluation tire: 630 kPa
- Load applied to evaluation tire: 21.3 kN
- Vehicle speed: 70 km/h
- Evaluation conditions: Neutral gear shifted and Engine Turned Off
- Microphone position: 7.5 m from the center of vehicle and 1.2 m in height

### [Evaluation 1]

In Evaluation 1, it was evaluated as to how a noise level varies depending on whether a cutout groove is present or absent.

### (Comparative Example 1)

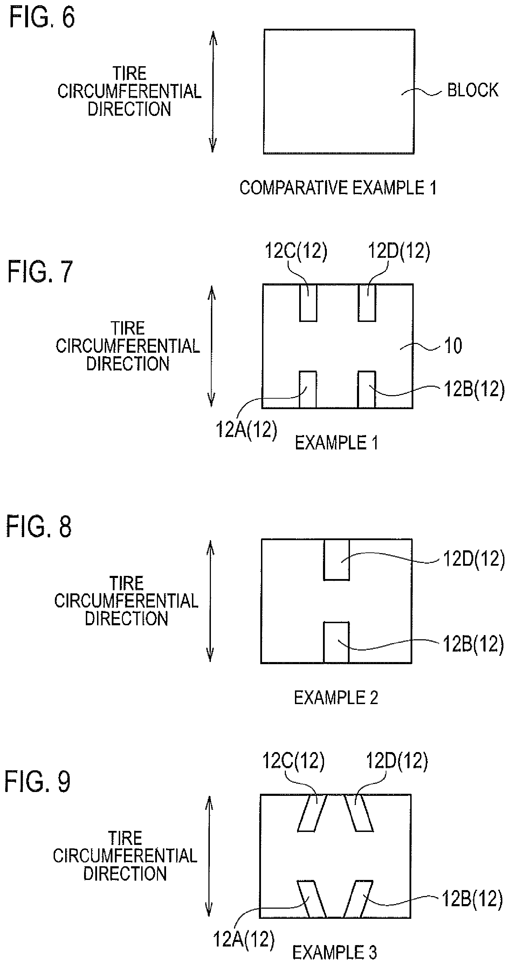

As a tire according to Comparative Example 1, as shown in Fig. 6, there was employed a tire including a block in which a cutout groove is not formed. Fig. 6 is a plan view showing a block (a tread surface) according to Comparative Example 1.

### (Example 1)

As a tire 100 according to Example 1, as shown in Fig. 7, there was employed the tire 100 including a block 10 in which cutout grooves 12 (a cutout groove 12A to a cutout groove 12D) are formed. A width of each of the cutout grooves 12 in a tire width direction was 4 mm, and a depth from a tread surface to a bottom of each of the cutout grooves 12 was 2 mm. Fig. 7 is a plan view showing the block 10 (the tread surface) according to Example 1.

### (Example 2)

As a tire 100 according to Example 2, as shown in Fig. 8, there was employed the tire 100 including a block 10 in which single cutout grooves 12 (a cutout groove 12B and a cutout groove 12D) are formed at a same end portion. A width of each of the cutout grooves 12 in a tire width direction was 8 mm, and a depth from a tread surface to a bottom of each of the cutout grooves 12 was 2 mm. Fig. 8 is a plan view showing the block 10 (the tread surface) according to Example 2.

### (Example 3)

As a tire 100 according to Example 3, as shown in Fig. 9, there was employed the tire 100 including a block 10 in which a cutout groove 12A to a cutout groove 12D are formed. In detail, the cutout groove 12A and the cutout groove 12B each have a shape such that these grooves are more proximal to a center of the block 10 in the tire width direction as they are more proximal to an end portion of the block 10 in the tire circumferential direction (herein, an end portion 11A). Similarly, the cutout groove 12C and the cutout groove 12D each have a shape in which these grooves are proximal to the center of the block 10 in the tire width direction as they are more proximal to an end portion of the block 10 in the tire circumferential direction (herein, an end portion 11B). A width of each of the cutout grooves 12 in the tire width direction was 4 mm, and a depth from a tread surface to the cutout groove 12 was 2 mm. Fig. 9 is a plan view showing a block 10 (a tread surface) according to Example 3.

### (Example 4)

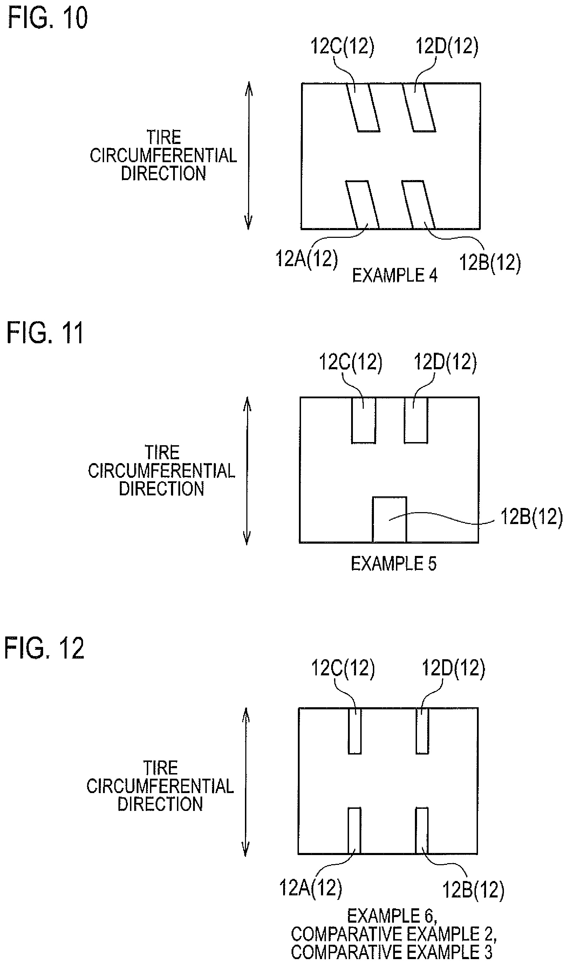

As a tire 100 according to Example 4, as shown in Fig. 10, there was employed the tire 100 including a block 10 in which cutout grooves 12 (a cutout groove 12Ato a cutout groove 12D) are formed. In detail, the cutout groove 12A and the cutout groove 12D each have a shape such that these grooves are more proximal to a center of the block 10 in the tire width direction as they are more proximal to an end portion of the block 10 in the tire circumferential direction. Similarly, the cutout groove 12B and the cutout groove 12C each have a shape in which these grooves are more distant to the center of the block 10 in the tire width direction as they are more proximal to an end portion of the block 10 in the tire circumferential direction. Therefore, in a planer view, the cutout grooves 12 each have a shape in which they are inclined with respect to the tire circumferential direction. In the planer view, the cutout grooves 12 each are formed in a shape in which they are parallel to each other. A width of each of the cutout grooves 12 in the tire width direction was 4 mm, and a depth from a tread surface to each of the cutout grooves 12 was 2 mm. Fig. 10 is a plan view showing a block 10 (a tread surface) according to Example 4.

### (Example 5)

As a tire 100 according to Example 5, as shown in Fig. 11, there was employed the tire 100 including a block 10 in which cutout grooves 12 (a cutout groove 12B, a cutout groove 12C, and a cutout groove 12D) are formed. In detail, the cutout groove 12B is formed on the side of one end portion of the block 10 in the tire circumferential direction (herein, on the side of an end portion 11A). The cutout groove 12C and the cutout groove 12D are formed on the side of the other end portion of the block 10 in the tire circumferential direction (herein, on the side of an end portion 11B). That is, one cutout groove is formed on the side of one end portion of the block 10 in the tire circumferential direction, and a plurality of, in other words, two cutout grooves are formed on the side of the other end portion of the block 10 in the tire circumferential direction. A width of the cutout groove 12B in the tire width direction was 8 mm, a width of each of the cutout groove 12C and the cutout groove 12D in the tire width direction was 4 mm, and a depth from a tread surface to each of the cutout grooves 12 was 2 mm. Fig. 11 is a plan view showing a block 10 (a tread surface) according to Example 5.

### (Example 6)

As a tire 100 according to Example 6, as shown in Fig. 12, there was employed the tire 100 including a block 10 in which cutout grooves 12 (a cutout groove 12A to a cutout groove 12D) are formed. A width of each of the cutout grooves 12 in the tire width direction was 2.2 mm, and a depth from a tread surface to a bottom of each of the cutout grooves 12 was 2 mm. Fig. 12 is a plan view showing blocks 10 (tread surfaces) according to Example 6, Comparative Example 2, and Comparative Example 3.

### (Comparative Example 2)

As a tire according to Comparative Example 2, as shown in Fig. 12, there was employed the tire including a block 10 in which cutout grooves 12 (a cutout groove 12A to a cutout groove 12D) are formed. A width of each of the cutout grooves 12 in the tire width direction was 2 mm, and a depth from a tread surface to a bottom of each of the cutout grooves 12 was 2 mm.

### (Comparative Example 3)

As a tire according to Comparative Example 3, as shown in Fig. 12, there was employed the tire including a block 10 in which cutout grooves 12 (a cutout groove 12A to a cutout groove 12D) are formed. A width of each of the cutout grooves 12 in the tire width direction was 1.8 mm, and a depth from a tread surface to a bottom of each of the cutout grooves 12 was 2 mm.

### (Evaluation Result)

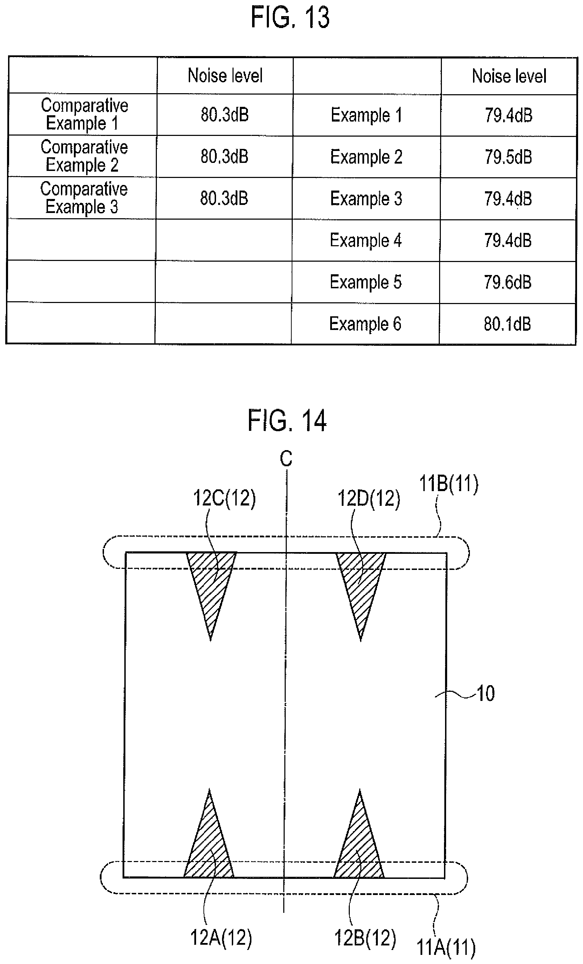

As shown in Fig. 13, in Example 1 to Example 6, it was verified that the noise level lowered in comparison with that in Comparative Example 1 to Comparative Example 3. That is, it was verified that the noise levels lowered more remarkably when the cutout grooves 12 were formed. In addition, it was verified that the noise level lowered by forming the width of each of the cutout grooves 12 in the tire width direction so as to be greater than 2 mm.

A frictional performance and a stable steering wheel handling performance in Example 1 was better than those in Example 4.

### [Other Embodiment(s)]

While the present invention was described by way of the foregoing embodiment, it should not be understood that the statements and drawings forming a part of this disclosure limit the present invention. From this disclosure, a variety of alternative embodiments, examples, and operational techniques would be self-evident to one skilled in the art.

The embodiment illustrated a case in which a plurality of cutout grooves 12 (the cutout groove 12A to the cutout groove 12D) are formed. However, the embodiment is not limitative thereto. It is sufficient if one or more cutout grooves 12 be formed to an extent such that a width in the tire width direction is greater than 2 mm, and is 50% or less of the width of the block 10 in the tire width direction.

In the embodiment, the width of each of the cutout grooves 12 is constant. However, the embodiment is not limitative thereto. Specifically, as shown in Fig. 14, the width of each of the cutout grooves 12 needs not to be constant. Fig. 14 is a plan view showing a block 10 (a tread surface) according to other embodiments. In such a case, it is preferable that the width of each of the cutout groove 12 be smaller as it is more distant from an end portion 11 of the block 10 in the tire circumferential direction. In this manner, while the rigidity of the block 10 is restrained from being degraded more than necessary, a deformation of the end portions 11 (corner portions) of the block 10 is accelerated, and a deformation of the block 10, caused by the shear force in the tire circumferential direction, can be restrained as a whole.

All the contents of Japanese Patent Application No. 2010-234660 (filed on October 19, 2010) are incorporated therein by reference.

### [Industrial Applicability]

According to the present invention, there can be provided a tire that is capable of restraining a noise referred to as a "pitch noise" or a "pattern noise" or the like.

## Claims

1. A tire (100) comprising a block (10) having a tread surface that constitutes a tire tread surface, wherein
the block (10) is partitioned by at least one or more deep grooves (20),
the block (10) has a pair of cutout grooves (12) at a stepping side end portion in a tire circumferential direction, and
a width of each said cutout groove (12) in a tire width direction is greater than 2 mm, and is 50% or less of a width of the block (10) in the tire width direction, wherein
the cutout grooves (12) extend along the tire circumferential direction and terminate within the block (10); and
wherein 50% or more of a width of each cutout groove (12) in the tire width direction is included in a range of 50% or less of a width of the block (10) in the tire width direction around the centerline of the block (10) in the tire width direction.

2. The tire according to claim 1, wherein a depth from the tread surface to a bottom of the cutout groove (12) is 50% or less of a depth from the tread surface to a bottom of the deep groove (20).

3. The tire according to claim 1, wherein the cutout groove (12) is formed at a stepping side end portion (11A) among end portions (11A, 11B) of the block (10) in the tire circumferential direction.

4. The tire according to claim 1, wherein the cutout groove (12) has a linearly symmetrical shape with respect to a centerline of the block (10) in the tire width direction.

5. The tire according to claim 1, wherein the width of the cutout groove (12) is smaller as it is more distant from an end portion (11) of the block (10) in the tire circumferential direction.

6. The tire according to claim 1, wherein the cutout groove (12) is formed in a triangular shape in a plan view of the block (10).

## Patentansprüche

1. Reifen (100), umfassend einen Block (10) mit einer Lauffläche, welche eine Reifenlauffläche bildet, wobei
der Block (10) durch zumindest eine oder mehrere tiefe Rillen (20) aufgeteilt ist,
der Block (10) ein Paar ausgeschnittener Rillen (12) am Seitenstufenendabschnitt in einer Reifenumfangsrichtung aufweist, und
eine Breite jeder der ausgeschnittenen Rillen (12) in einer Reifenbreitenrichtung größer als 2 mm und 50% oder kleiner als die Breite des Blocks (10) in der Reifenbreitenrichtung ist, wobei
die ausgeschnittenen Rillen (12) sich entlang der Reifenumfangsrichtung erstrecken und innerhalb des Blocks (10) enden; und
wobei 50% oder mehr einer Breite jeder ausgeschnittenen Rille (12) in der Reifenbreitenrichtung innerhalb eines Bereichs von 50% oder weniger als die Breite des Blocks (10) in der Reifenbreitenrichtung um die Mittellinie des Blocks (10) in der Reifenbreitenrichtung einbegriffen ist.

2. Reifen nach Anspruch 1, wobei eine Tiefe der Lauffläche bis zum Boden der ausgeschnittenen Rille (12) 50% oder weniger einer Tiefe von der Lauffläche bis zu einem Boden der tiefen Rille (20) entspricht.

3. Reifen nach Anspruch 1, wobei die ausgeschnittene Rille (12) an einem Seitenstufenendabschnitt (11A) unter Endabschnitten (11A, 11B) des Blocks (10) in der Reifenumfangsrichtung ausgebildet ist.

4. Reifen nach Anspruch 1, wobei die ausgeschnittene Rille (12) eine lineare symmetrische Form in Bezug auf eine Mittellinie des Blocks (10) in der Reifenbreitenrichtung aufweist.

5. Reifen nach Anspruch 1, wobei die Breite der ausgeschnittenen Rille (12) desto kleiner wird je weiter sie von einem Endabschnitt (11) des Blocks (10) in der Reifenumfangsrichtung entfernt ist.

6. Reifen nach Anspruch 1, wobei die ausgeschnittene Rille (12) eine dreieckige Form in der Draufsicht des Blocks (10) aufweist.

## Revendications

1. Bandage pneumatique (100) comprenant un pavé (10) comportant une surface de bande de roulement constituant une surface de bande de roulement du bandage pneumatique, dans lequel :
le pavé (10) est divisé par au moins une ou plusieurs rainures profondes (20) ;
le pavé (10) comporte une paire de rainures découpées (12) au niveau d'une partie d'extrémité du côté d'engagement, dans une direction circonférentielle du bandage pneumatique ; et
une largeur de chaque dite rainure découpée (12), dans une direction de la largeur du bandage pneumatique, est supérieure à 2 mm, et représente 50% ou moins d'une largeur du pavé (10), dans la direction de la largeur du bandage pneumatique ; dans lequel :
les rainures découpées (2) s'étendent le long de la direction circonférentielle du bandage pneumatique et se terminent dans le pavé (10) ; et
dans lequel 50% ou plus d'une largeur de chaque rainure découpée (12), dans la direction de la largeur du bandage pneumatique, sont inclus dans un intervalle représentant 50% ou moins d'une largeur du pavé (10), dans la direction de la largeur du bandage pneumatique, autour de la ligne médiane du pavé (10), dans la direction de la largeur du bandage pneumatique.

2. Bandage pneumatique selon la revendication 1, dans lequel une profondeur, allant de la surface de bande de roulement vers un fond de la rainure découpée (12), représente 50% ou moins d'une profondeur allant de la surface de bande de roulement vers un fond de la rainure profonde (20).

3. Bandage pneumatique selon la revendication 1, dans lequel la rainure découpée (12) est formée au niveau d'une partie d'extrémité du côté d'engagement (11A) parmi des parties d'extrémité (11A, 11B) du pavé (10), dans la direction circonférentielle du bandage pneumatique.

4. Bandage pneumatique selon la revendication 1, dans lequel la rainure découpée (12) a une forme linéairement symétrique par rapport à une ligne médiane du pavé (10), dans la direction de la largeur du bandage pneumatique.

5. Bandage pneumatique selon la revendication 1, dans lequel la largeur de la rainure découpée (12) est réduite en fonction de sa distance d'une partie d'extrémité (11) du pavé (10), dans la direction circonférentielle du bandage pneumatique.

6. Bandage pneumatique selon la revendication 1, dans lequel la rainure découpée (12) est formée en une forme triangulaire dans une vue en plan du pavé (10).
